# EUROPEAN PATENT SPECIFICATION

(11) **EP 1 660 755 B1**
(45) Date of publication and mention of the grant of the patent: **10.12.2008**
(21) Application number: 04775944.4
(22) Date of filing: 24.05.2004
(51) Int. Cl.: E21B 43/00, F04B 47/02

(54) **PORTABLE, SURFACE-MOUNTED WELL PUMP**
TRAGBARE, OBERFLÄCHENMONTIERTE BOHRLOCHPUMPE
POMPE DE PUITS PORTATIVE, MONTEE EN SURFACE

(30) Priority: 17.07.2003 US 622620
(43) Date of publication of application: 31.05.2006
(73) Proprietor: McEdwards, Donald George, Willits, CA 95490 (US)
(72) Inventor: McEdwards, Donald George, Willits, CA 95490 (US)
(74) Representative: Maggs, Michael Norman
(86) International application number: PCT/US2004/013961
(87) International publication number: WO 2005/017354

(56) References cited:
- US-A- 2 496 688
- US-A- 2 702 025
- US-A- 3 359 809
- US-A- 3 405 563
- US-A- 6 164 936
- US-B1- 6 474 962

## Description

### BACKGROUND OF THE INVENTION

Monitoring wells installed as part of groundwater investigations related to leaking surface or underground storage tanks are typically constructed of 51 mm or 102mm (two or four inch) diameter PVC casing and well screen to between 6 to 30 +m (20 to 100+feet) depending on the depth to groundwater. The protocol for taking water samples from these monitoring well requires that the well be pumped or bailed under three to five well volumes have been removed, the well dewaters, or successive measurements of indicator parameters pH, temperature, and electrical conductivity have stabilized.

For water level depths less than about 7.6m (25 feet) an electric surface suction pump and an inwell purge tube is often used to pump the well. The inwell purge tube has a check valve at its bottom so that rapid up and down motion of the purge tube will fill the tube with water and allow the surface suction pump to be primed. Once the surface suction pump is primed, the pump will deliver water from the well until the water level declines to a theoretical limit of about 9m (30 feet) below the suction pump depending on ambient atmospheric pressure (7kPa = 10.3m (14.7 psi = 33.9 feet)). As the water level depth increases due to pumping, the flow rate declines because of the increased lift required. Flow rates up to 0.2 litres per second (3 gallons per minute) are attainable with surface suction pumps.

For water level depths greater than about 7.6m (25 feet) small electric submersible pumps or compressed air (or nitrogen) displacement pumps designed for 51mm or 102 mm (2 or 4 inch) diameter wells are used to purge monitoring wells. These pumps push water from inside the well to the surface through attached tubing and require downhole electrical or air lines to activate the pump. The flow rate of these downhole pumps rarely exceeds 0.13 litres per second (2gpm).

The inventor routinely purges 51mm (2") diameter monitoring wells where the water level depth is less than 7.6m (25 feet) with a 12 volt surface suction pump connected to a dedicated (stay in the well) purge tube having a bottom check valve. The impetus for this invention was the effort required to purge some monitoring wells where the water level depths were greater than about 7.6m (25 feet) and where the flow rate of the surface suction pump was very low or zero. In these situations the inventor would purge the wells by hand by jacking the purge tube up and down until the requisite three to five well bore volumes were pumped.

US-A-3405563 discloses a reciprocating pump having an adjustable, circular, annular wheel for providing reciprocating motion to a plunger. This document discloses the preamble of Claim 1. US-A-6164936 discloses a vertically reciprocating pump driven manually or by animal or a motor. A valve seals under the weigh of liquid above it or allows passage of liquid when a piston of the pump moves down the water column in a drainage pipe with which the pump is used.

The invention provides a means of translating rotary motion in the horizontal plane, such as provided by a portable hand drill, to rapid, cyclic, up and down motion of a well pump tube so that the well can be pumped from any depth without placing a pump in the well. The present embodiment of the invention can pump a constant 0.16 litres per second (2.5 gallons per minute) from a 51mm (2 inch) diameter monitoring well regardless of the water level depth or changes in the water level depth.

Other applications of the rotary-to-linear motion translater described herein are given in the claims section below.

The invention is set out in Claim 1. The dependent claims mention some optional features.

### BRIEF SUMMARY OF THE INVENTION

The invention uses rotary motion in one plane (e.g. horizontal plane) to cause sinusoidal linear motion in a direction normal to the plane (e.g. vertical plane - cyclic up and down motion). The up and down motion is transferred to a well pump tube with bottom check value so that water or other fluids can be pumped from any depth.

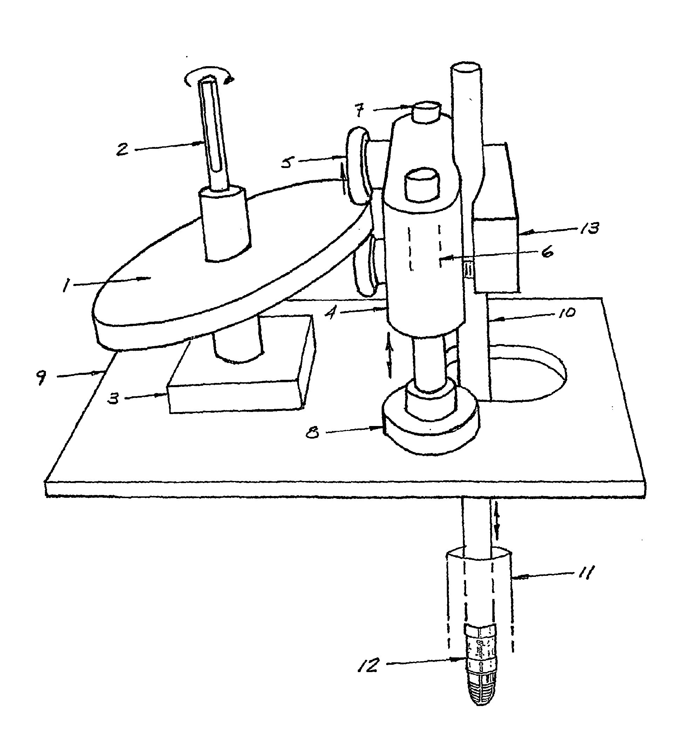

### BRIEF DESCRIPTION OF THE DRAWING

The invention will be described in greater detail with reference to the accompanying perspective line drawing which illustrates a preferred embodiment of the invention.

### DETAILED DESCRIPTION OF THE INVENTION

The components of the invention include at least one elliptical plate (1) mounted on a rotating shaft (2), which shaft (2) runs through the center of gravity of the plate (1) and whose axis is at an angle other than 90 degrees from the plane of the plate (2), and which shaft (1) is keyed or otherwise attached to the plate (2) such that rotational movement of the shaft (1) about its axis is transferred to the plate (2); mechanical support and bearing means (3) mechanically attached to the base plate (9) to provide rotational support to the shaft (2) and attached elliptical plate (1); at least one elliptical plate follower (4) affixed with rollers or bearing means (5) positioned on the top and bottom surfaces of the elliptical plate (1) at a fixed distance from the axis of the shaft (2); said follower (4) constrained by rollers (6) and roller races (7) or bearing means to allow bidirectional linear movement of the follower (4) only in a direction parallel to the shaft (2) axis; support brackets (8) means for the roller races (7) mechanically affixed to the roller races (7) and base plate (9). As the shaft (2) rotates either clockwise or counterclockwise, the top and bottom surfaces of the elliptical plate (1) bear on the follower rollers (5) and cause the attached follower (4) to move in an alternating bidirectional linear manner. The follower (4) travel distance parallel to the shaft (2) axis is determined by the distance of the follower rollers (5) from the axis of the rotating shaft (2) and the angle between the plane of the elliptical plate (1) and the axis the shaft (2). The bidirectional linear motion of the follower (4) is transferred to at least one well pump tube (10) with a bottom check valve (12) installed inside a well (11) by affixing the follower (4) to the pump tube (10) by at least one mechanical attachment means (13). With the shaft (2) axis aligned vertically, for every horizontal revolution of the shaft (2) and elliptical plate (1), the follower (4) and affixed pump tube (10) move one follower (4) travel distance down (down stroke) and one follower (4) travel distance up (up stroke). On the down stroke, the pump tube (10) is forced down one follower (4) travel distance with a velocity that opens the bottom check valve (12) which allows water to enter the pump tube (10) and displace water upward already in the pump tube (10). On the up stroke the pump tube (10) is forced up with a velocity that closes the bottom check valve (10) which allows water to be retained in the pump tube (10) and be lifted up one follower (4) travel distance. In this manner water is incrementally added to the pump tube (10) above the water level in the well. Once the pump tube is full of water, additional water added to the pump tube by alternating up and down strokes is discharged from the top of the pump tube (10) and from the well (11). At high rotational velocity of the shaft (2) and elliptical plate (1), the follower (4) and pump tube (10) move up and down with high velocity. On the up stroke, this high velocity imparts upward momentum to the water column in the pump tube (10). The imparted momentum is harvested to move water out of the pump tube (10) by the very rapid reversal of direction of the pump tube (10) on the high velocity down stroke.

For a constant angular rotation of the shaft (2) and elliptical plate (1) the velocity of the up and down motion of the follower (4) and affixed pump (10) is sinusoidal and the pumping rate of the invention is constant and independent of the depth to groundwater.

## Claims

1. A portable pump comprising at least one rotating means (1) mounted on a rotating shaft means (2) which shaft means runs through the center of gravity of the rotating means and whose axis is at an angle other than 90 degrees from the plane of the rotating means, and which shaft means is keyed or otherwise attached to the rotating means such that rotational movement of the rotating shaft means about its axis is transferred to the rotating means; mechanical support and bearing means (3) to provide rotational support to the rotating shaft means; a follower means (4) affixed with rollers or bearing means (5) positioned to bear on the top and bottom surfaces of the rotating means at a fixed distance from the axis of the rotating shaft means; rollers and roller races or bearing means (6, 7) to allow linear movement of the follower means only in a direction parallel to the rotating shaft means axis; **characterised by** the rotating means comprising an elliptical plate means (1), and by a well pump tube means (10) with a bottom check valve means (12) being affixed by mechanical attachment means (13) to the follower means, rotation of the rotating shaft means in use filling, lifting and draining the pump tube and check valve means so as to pump water or other fluids from a well (11).

2. A pump according to Claim 1 wherein the rotation of the rotating shaft means (2) is constant so that the pumping rate is also constant.

3. A pump as claimed in Claim 1 or Claim 2 in which the pump tube means (10) is a straight elongate tube parallel to the axis of the rotating shaft means (2).

4. A pump as claimed in any preceding claim which includes a base plate (9) on which the rotating shaft means (2) and support brackets (8) for the rollers and roller races or bearing means (6, 7) are mounted.

5. A pump as claimed in Claim 4 in which the pump tube means (10) is supported by the base plate (9) via the follower means (4), the roller and roller races or bearing means (6,7) and the support brackets.

## Patentansprüche

1. Tragbare Pumpe mit zumindest einem Drehmittel (1), das auf einem Umlauf-Wellenmittel (2) angebracht ist, wobei das Wellenmittel durch den Massenmittelpunkt des Drehmittels verläuft und dessen Achse in einem von 90° verschiedenen Winkel zur Ebene des Drehmittels steht, und wobei das Wellenmittel mit dem Drehmittel verkeilt oder anderweitig befestigt ist, so dass die Drehbewegung des Umlauf-Wellenmittels um seine Achse auf das Drehmittel übertragen wird; mit mechanischen Stütz- und Lagermitteln (3) zum Vorsehen einer Drehlagerung für das Umlauf-Wellenmittel; mit Folgemitteln (4), die mit Walzen oder Lagermitteln (5) verbunden sind, die angeordnet sind, um auf den Ober- und Unterflächen des Drehmittels in einem festen Abstand von der Achse des Umlauf-Wellenmittels aufzuliegen; mit Walzen und Walzlaufbahnen oder Lagermitteln (6, 7), um eine lineare Bewegung der Folgemittel nur in einer Richtung parallel zur Achse des Umlauf-Wellenmittels zu ermöglichen; **dadurch gekennzeichnet, dass** das Drehmittel ein elliptisches Plattenmittel (1) aufweist, und **gekennzeichnet durch** ein Bohrloch-Pumprohrmittel (10) mit einem unteren Rückschlagventilmittel (12), das **durch** mechanische Befestigungsmittel (13) am Folgemittel angebracht ist, wobei im Betrieb die Drehung des Umlauf-Wellenmittels das Pumprohrmittel und das Rückschlagventilmittel füllt, anhebt und entleert, um Wasser oder andere Fluide aus einem Bohrloch (11) zu pumpen.

2. Pumpe nach Anspruch 1, wobei die Drehung des Umlauf-Wellenmittels (2) konstant ist, so dass die Pumpgeschwindigkeit ebenfalls konstant ist.

3. Pumpe nach Anspruch 1 oder 2, wobei das Pumpenrohrmittel (10) ein gerades, längliches Rohr ist, das parallel zur Achse des Umlauf-Wellenmittels (2) verläuft.

4. Pumpe nach einem vorherigen Anspruch, die eine Grundplatte (9) enthält, auf der das Umlauf-Wellenmittel (2) und Stützhalterungen (8) für die Walzen und Walzlaufbahnen oder Lagermittel (6, 7) angebracht sind.

5. Pumpe nach Anspruch 4, wobei das Pumprohrmittel (10) von der Grundplatte (9) über das Folgemittel (4), die Walze und Walzlaufbahnen oder Lagermittel (6, 7) und die Stützhalterungen gestützt wird.

## Revendications

1. Pompe portative comprenant au moins un moyen de rotation (1) monté sur un moyen formant arbre de rotation (2), ledit moyen formant arbre s'étendant à travers le centre de gravité du moyen de rotation et son axe formant un angle autre que de 90 degrés avec le plan du moyen de rotation, ledit moyen formant arbre étant claveté ou autrement fixé au moyen de rotation de telle sorte que le mouvement de rotation du moyen formant arbre de rotation autour de son axe soit transféré au moyen de rotation ; un moyen formant support mécanique et palier (3) conçu pour fournir un support de rotation au moyen formant arbre de rotation ; un moyen formant poussoir (4) sur lequel sont fixés des rouleaux ou des moyens formant palier (5) positionnés de sorte à reposer sur les surfaces supérieure et inférieure du moyen de rotation à une distance fixe de l'axe du moyen formant arbre de rotation ; des rouleaux et des chemins de roulement ou des moyens formant palier (6, 7) pour permettre le mouvement linéaire du moyen formant poussoir uniquement dans un sens parallèle à l'axe du moyen formant arbre de rotation ; **caractérisée en ce que** le moyen de rotation comprend un moyen formant plaque elliptique (1), et **en ce que** un moyen formant tube de pompe de puits (10) avec un moyen formant clapet de non retour de fond (12) sont fixés par un moyen de fixation mécanique (13) au moyen formant poussoir, la rotation du moyen formant arbre de rotation utilisé remplissant, soulevant et vidangeant le moyen formant tube de pompe et le moyen formant clapet de non retour de sorte à pomper de l'eau ou d'autres fluides à partir d'un puits (11).

2. Pompe selon la revendication 1, dans laquelle la rotation du moyen formant arbre de rotation (2) est constante de sorte que le débit de la pompe soit également constant.

3. Pompe selon la revendication 1 ou la revendication 2, dans laquelle le moyen formant tube de pompe (10) est un tube allongé rectiligne parallèle à l'axe du moyen formant arbre de rotation (2).

4. Pompe selon l'une quelconque des revendications précédentes, comprenant une plaque de base (9) sur laquelle sont montés le moyen formant arbre de rotation (2) et les supports de palier (8) pour les rouleaux et les chemins de roulement ou les moyens formant palier (6, 7).

5. Pompe selon la revendication 4, dans laquelle le moyen formant tube de pompe (10) est supporté par la plaque de base (9) via le moyen formant poussoir (4), le rouleau et les chemins de roulement ou les moyens formant palier (6, 7) et les supports de palier.
